# EUROPEAN PATENT SPECIFICATION

(11) **EP 0 534 538 B1**
(45) Date of publication and mention of the grant of the patent: **06.08.1997**
(21) Application number: 92202854.3
(22) Date of filing: 17.09.1992
(51) Int. Cl.: H02J 13/00, H02G 3/00

(54) **Distribution device**
Verteileinrichtung
Dispositif de distribution

(30) Priority: 26.09.1991 NL 9101631
(43) Date of publication of application: 31.03.1993
(73) Proprietor: HOLEC SYSTEMEN EN COMPONENTEN B.V., NL-7555 CS Hengelo (NL)
(72) Inventor: Van de Ven, Nico Jan, NL-7552 JB Hengelo (NL); Kippers, Mannes, NL-7642 VK Wierden (NL)
(74) Representative: de Bruijn, Leendert C.

(56) References cited:
- EP-A- 0 119 187

## Description

The invention relates to a distribution device for an electrical installation. A distribution device of this type is known in practice.

The known distribution device is provided with a number of switching elements (automatic switches), such as short-circuiting and earthing switches, which are mounted in the factory according to the specifications of the particular distribution device. The number and the type of switching elements mounted in the distribution device, and the associated wiring, is therefore fixed. In practice, however, the need often arises to alter an electrical installation, for example by creating more groups or by changing the purposes of the existing groups. To this end it is necessary to adapt the distribution device by adding switching elements or by replacing them by switching means of a different type. Because of the fixed number of switching elements, however, the known distribution device is less suitable for expansion, while the replacement of switching elements often requires extensive changes in the distribution device, particularly with regard to wiring.

In practice it is increasingly required to be able to remotely operate apparatus which is connected to the electrical installation or to operate parts of the electrical installation in this way. In this instance there are advantages in being able to switch remotely groups or parts of groups of the installation, for example in order to switch off all electrical apparatus in an area which is not in use, or to afford extra protection for particular electrical apparatus. For this purpose it is necessary to be able to operate remotely the switching elements which are present in the distribution device. Fitting a known distribution device with remotely operable switching elements entails the difficulty that said known distribution device is generally not designed for incorporating switching elements of this type. This means that replacing the switching elements also requires an adaptation or rebuild of the distribution device, which entails the fitting of supplementary wiring for the purpose of transmitting control signals. This fitting of additional wiring in an existing distribution device is, however, rather complicated and time-consuming, making it relatively expensive. Furthermore, the fitting of additional wiring entails the possibility of errors being made in the connection of said wiring. This may not only affect the correct functioning of the distribution device, but also the safety of the electrical installation.

The object of the invention is to avoid these drawbacks and to provide a distribution device for an electrical installation, which distribution device is not only readily expandable, but is also suitable for fitting remotely controllable switching elements. The distribution device according to the invention is characterised for this purpose in that for incorporating remotely controllable switching elements said distribution device is provided with energy-connection members and signal-connection members, the signal-connection members being connected to a conductor system for transmitting control signals, and in that the conductor system comprises one or more conductor modules, each conductor module comprising conductors accommodated in a common housing, as well as contact members for making contact with further conductors.

By providing energy- and signal-connection members for fitting, as required, switching elements which may or may not be remotely operable, a flexible distribution device is provided which may be readily adapted to changed user requirements. By connecting the signal-connection members to a conductor system (set of conductors) for the purpose of transmitting control signals, the subsequent fitting of additional wiring becomes unnecessary, and as a result the fitting of remotely operable switching elements can be achieved considerably more cheaply and with a greatly reduced risk of incorrect connections.

The adaptation and expansion of the distribution device according to the invention is simplified by constructing said device in such a way that the conductor system comprises one or more conductor modules, each conductor module comprising conductors accommodated in a common housing, as well as contact members for making contact with further conductors. By means of such a modular construction of the conductor system it is possible to incorporate one or more conductor modules into the distribution device as required, and to add further modules if the distribution device is to be expanded. Accommodating the conductors in a common housing has the advantage that the conductors are formed into a single module, which makes it very easy to fit supplementary conductors or to replace existing conductors by simply adding a further conductor module or by replacing an existing conductor module. For making contact with further conductors, the conductor modules can be provided with contact members, with the result that the conductor modules are readily incorporated into the conductor system.

EP-A-0 119 187 discloses an electrical installation system comprising power leads as well as communication leads. In this known installation system remotely controllable switching elements could be connected by energy-connection and signal-connection members arranged for the respective connection with an energy- and signal-connector on the switching element. The energy- and signal-connecting members are connected to a conductor system for both supply and transmitting control signals. The conductor system comprises a plurality of conductor modules having conductors accommodated in a common housing, as well as contact members for making contact with further conductors. However, a distribution device or box for such an electrical installation system and provided with energy- and signal-connection members and a module control signal conductor system is not disclosed in said European patent application.

The invention is characterized in that the energy-connection members are arranged in rows in the distribution box, that the conductors system comprises conductor modules extending parallel to the rows of energy-connecting members and that the signal-connection members are disposed in the conductor modules. Thereby a highly flexible distribution device or box is obtained.

A further simplification of the distribution device according to the invention is obtained if said device is constructed in such a way that the signal-connection members are disposed in the conductor modules. This makes it possible to install both the signal-connection members and the associated part of the conductor system in one operation when the distribution device is expanded. Moreover, the signal-connection members need not be connected again to the conductor system upon modification of the distribution device, which again saves a connection step and the risk of errors being made in that step.

The distribution device according to the invention is preferably constructed in such a way that said device is further provided with a signal-connection unit for connecting signal leads for the purpose of transmitting operational signals to and from the distribution device, and that the conductor system is connected to the signal-connection unit. By arranging the connection of signal leads (which provide the transmission of control signals to and from control units situated outside the distribution device) via a central signal-connection unit, a simple and clear construction of the distribution device is achieved. This makes it possible, moreover, to incorporate additional provisions, such as signal processing circuits, protection devices, and the like, at a central point, i.e. the signal-connection unit. By providing a central connection point of this type in the form of a signal-connection unit, these additional provisions need be fitted only once.

For the purpose of connecting signal leads, the distribution device according to the invention is preferably constructed in such a way that for connecting signal leads the signal-connection unit is provided with terminal strips, which terminal strips are attached to the conductor system. The terminal strips make it possible to connect the signal leads in a simple manner. By incorporating the terminal strips in the signal-connection unit in advance, the subsequent fitting of further signal leads entails no additional material costs.

The conductor system, which may be constructed as one or more conductor modules, may be permanently connected to the signal-connection unit. In order to allow simpler adaptation of the distribution device to user requirements, the conductor system should preferably also be easily replaceable. To this end, the distribution device is preferably constructed in such a way that the signal-connection unit is provided with one or more connectors for detachably connecting the conductor system.

Signal leads originating from various types of remote control units may be connected to the signal-connection unit. Such remote control units may, for example, be pushbutton or two-way switches, but also radio or infrared receivers. Remote control is also possible by means of telecommunication links, such as telephone links and databuses. The different types of remote control will, in general, generate different types of signals. In order to achieve a simple construction of the distribution device, the remotely controllable switching elements are preferably equipped for reacting to uniform control signals. For the purpose of converting different types of control signals into the uniform control signals of the distribution device, said device is preferably constructed in such a way that the signal-connection unit is provided with means for the conversion of signal codes and for the passing of suitable control signals to the conductor system. The means for the conversion of signal codes may comprise relays or electronic circuits, for example signal processing circuits. Thus the signal processing circuits may form an interface between, for example, telecommunication links and the conductor system of the distribution device. Electronic circuits of this type may, for example, be provided with a microprocessor or an application-specific integrated circuit for the conversion of control signals or for other tasks. Preferably, the different circuits and relays are disposed on separate printed circuit boards (plug-in cards) or in separate signal processing modules, so that the signal-connection unit can be adapted in a simple manner to different remote control means. If required, sensors, such as infrared sensors, may be disposed in the signal-connection unit itself.

Uniform control signals for the remotely controllable switching elements may be generated in a simple manner with the aid of switching members which, for example, emit control pulses having two or three voltage levels. To this end, the distribution device can be constructed in such a way that the signal-connection unit is provided with actuation means as well as switching members for the purpose of controlling, via the actuation means, the remotely controllable switching elements.

An advantageous and safe construction of the distribution device according to the invention is achieved if said device is constructed in such a way that the energy-connection members comprise first energy-connection members for supplying electrical energy and second energy-connection members for discharging electrical energy, and that the signal-connection members are positioned between the first and the second energy-connection members. By disposing the signal-connection members in a separate space between the first and second energy-connection members, a functional separation as well as a voltage separation is achieved, which enhances both the electrical safety and the clarity of lay-out of the distribution device and thereby simplifies installation.

A particularly compact construction of the distribution device according to the invention is achieved if said device is equipped to incorporate switching elements adjacent to each other and transversely to the conductor system. This makes it possible to control the greatest possible number of switching elements, the length of the conductor system being as short as possible.

A conductor module according to the invention is preferably constructed in such a way that said module comprises a first group of conductors for supplying control signals to the signal-connection members of the conductor module, as well as a second group of conductors for supplying control signals to at least one further conductor module. The first group of conductors makes it possible to supply control signals to the signal-connection members and thereby to the remotely controllable switching elements which are connected to the signal-connection members. For the purpose of connecting further conductors or a further conductor module, a second group of conductors is provided. This setup makes it possible to separate the control signals of the switching elements connected to the conductor module in question from those of switching elements connected to a further conductor module. Preferably the conductor module is constructed in such a way that it has two long sides and two short sides, and that the signal-connection members are disposed along a long side and the contact members along at least one short side. By disposing the signal-connection members along a long side, sufficient space is provided for the disposition of switching elements. Disposing the contact members, such as a connector, along a short side allows a compact construction of this connector. For the purpose of using the conductor module according to the invention in the case of control signals having, for example, three signal levels, said conductor module is preferably constructed in such a way that the signal-connection members each comprise three contact surfaces. Of these three contact surfaces, a first surface may be connected to a first signal level, a second surface to a second signal level and a third surface to a common potential.

Although it is possible to fit the housing of the conductor module with loose leads or a ribbon cable, the assembly of the conductor module may be greatly simplified by constructing it in such a way that the conductors are formed by conductor strips of a printed circuit board. By using known etching processes, any required conductor strip structure may be obtained. Furthermore, any number of contact surfaces may be formed on the board by a process of this type. In order to incorporate large numbers of conductors or when using signal-connection members comprising three contact surfaces, a double-sided printed circuit board may be used advantageously. However, it is also possible to use, instead of a printed circuit board, a flexible foil with conductor strips disposed thereon. This is particularly advantageous if a flexible conductor module is desired. Disposing a conductor module in the distribution device is generally simplest, however, if the conductor module is constructed in such a way that the housing is essentially rigid.

The conductor module according to the invention is advantageously constructed in such a way that the housing is provided with positioning lugs for positioning the conductor module in the distribution device. This simplifies the correct placement of the conductor module, while the positioning lugs may also provide a locking action, as a result of which the conductor module is held fast in the distribution device and is positioned therein in a defined manner. To receive the positioning lugs, cavities suitable for this purpose may be disposed in those parts of the distribution device which enclose the conductor module.

A very simple and advantageous design of the conductor module according to the invention is achieved if said conductor module is constructed in such a way that the housing comprises a middle part and at least two side parts which are connected with the middle part by folding edges, at least one side part being provided with locking means engaging with the other side part. The number of components of the conductor module is minimised and its assembly is further simplified if said conductor module is constructed in such a way that the housing is manufactured in one piece. Depending on the method used for manufacturing the housing it may however be preferable, for example because of the cost of producing a matrix, for the housing to consist of several, for example two, parts.

The invention is explained below by reference to the figures.

Figure 1 shows a diagram of a distribution device according to the invention.

Figure 2 shows a perspective view of a preferred embodiment of the distribution device according to the invention.

Figure 3 shows a perspective exploded view of a conductor module according to the invention.

Figure 4 shows a perspective exploded view of another embodiment of a conductor module according to the invention.

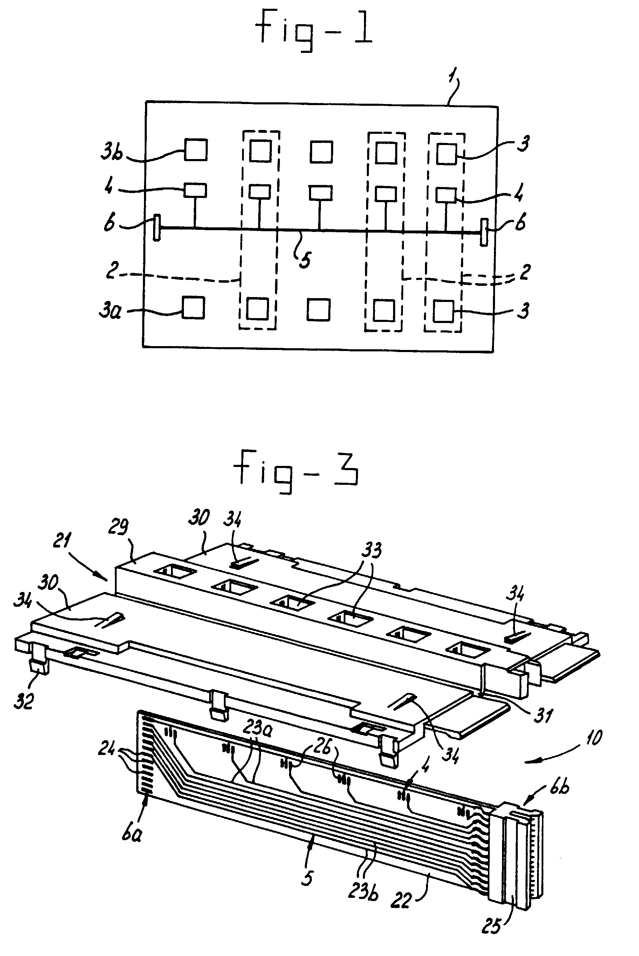

The distribution device 1 shown diagrammatically in Figure 1 is provided, for the purpose of fitting switching elements 2, with energy-connection members 3 and signal-connection members 4. The switching elements 2 may be fitted, as required, at the locations defined for this purpose in the distribution device 1; in Figure 1, the switching elements 2 present are indicated by dotted lines. For the purpose of making electrical contact with the distribution device 1, the switching elements 2 are provided with contact members (not shown) which, in the assembled state, make contact with the energy-connection members 3 and, if remotely controllable switching elements 2 are involved, with the signal-connection members 4. In the case of the embodiment shown diagrammatically, the energy-connection members 3a serve to supply electrical energy to the switching elements 2, while the energy-connection members 3b serve to discharge electrical energy.

The signal-connection members 4, in this case, are situated between the energy-connection members 3a and 3b, which achieves both a functional separation and a voltage separation with regard to the energy supply paths (3a) and energy discharge paths (3b).

The signal-connection members 4 are connected to a conductor system 5 for the purpose of transmitting control signals. The conductor system 5 may consist of a number of separated conductors which are each connected to a signal-connection member 4, or of one or more common conductors to which all signal-connection members 4 are connected (bus structure). Obviously it is also possible to combine both systems. To make contact with further conductors, the conductor system 5 is electrically connected to contact members 6. Signal leads may be connected to these contact members 6 for the purpose of establishing connections to remote control members situated outside the distribution device. Additionally, further conductors or a further conductor system of a further distribution device 1 may be connected to the contact members 6. Because of the presence of the signal-connection members 4 and the conductor system 5 in the distribution device 1, remotely controllable switching elements may be fitted to the distribution device according to the invention without difficulty.

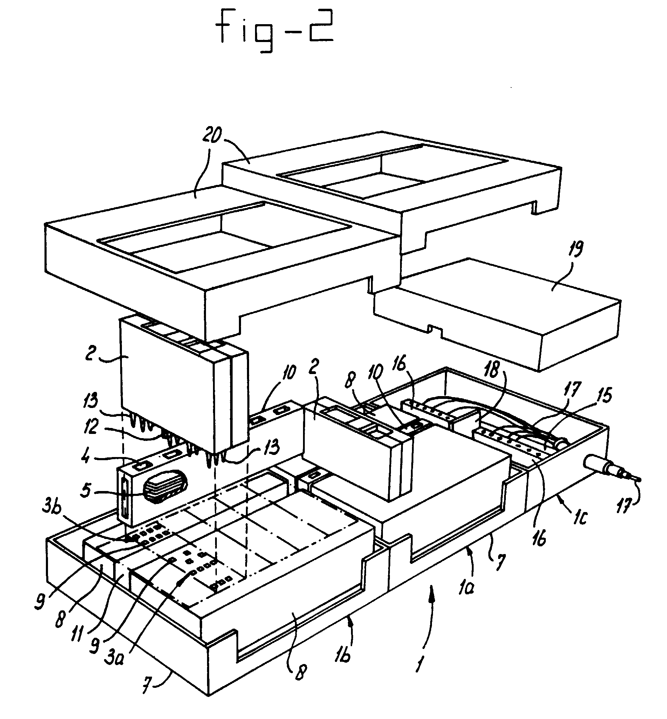

The preferred embodiment, shown in Figure 2, of the distribution device 1 according to the invention comprises a first unit 1a and a second unit 1b. Both units have a bottom part 7. In each bottom part 7, connection blocks 8 are disposed which are each provided with energy-connection members 3a and 3b, respectively. In the preferred embodiment shown, each energy-connection member 3 is formed by a number of connection members (not shown) disposed behind connection openings 9. The conductor system 5, like the signal-connection members 4, is disposed in conductor modules 10, one conductor module 10 being shown in a partially exploded view in order to show the conductor system 5 present therein. Between the connection blocks 8 of each member 1a or 1b, respectively, a groove 11 is present to receive the conductor module 10. In the assembled state, the signal-connection members 4 are positioned in such a way that a switching element 2, such as automatic switching control equipment, can make contact with them. To this end, a switching element 2 has a signal connector 12 for making contact with the signal-connection members 4, and contact pins 13 for making contact with the energy-connection members 3.

The distribution device 1 as shown also comprises a signal-connection unit 1c having a housing 15, in which terminal strips 16 are fitted. Signal leads 17 from outside the distribution device 1 may be connected to the terminal strips 16. The terminal strips 16 are connected, via a suitably equipped connection element 18 which may, for example, consist of a printed circuit board, to the conductor module 10 of the first unit 1a. Further components, such as a transformer, signal processing circuits, relays and fuses (not shown), may be disposed in the signal-connection unit 1c. Although the signal-connection unit 1c as shown comprises one housing 15, it is also possible to distribute the signal-connection unit 1c over several housings 15 or to expand it by means of components which are held in further housings 15. The signal-connection unit 1c can be sealed with a cover 19. Covers 20 of the first unit 1a and the second unit 1b are constructed in such a way that switching elements 2, in the assembled state, project through the covers 20, which makes it possible also to operate the switching elements 2 manually.

The preferred embodiment, shown in Figure 3 with exploded parts, of a conductor module 10 according to the invention comprises a housing 21 and a substrate 22. The conductor system 5 is disposed, in the form of conductor strips 23, on the substrate 22 which is preferably formed by a printed circuit board. For the purpose of making contact with a further conductor module 10, the substrate 22 is provided at one end with contact surfaces 24 which, together, form the contact member 6a. For the purpose of making contact with the signal-connection unit 1c or with a further conductor module 10, the substrate 22 is provided, at its other end, with a connector 25 which forms the contact member 6b and is electrically connected to the conductor strips 23. The signal-connection members 4 are always formed by a group of three contact surfaces 26. In the embodiment shown, the conductor module 10 is provided with six signal-connection members 4, but it is obviously possible to construct the conductor module 10 with any other number of signal-connection members 4. For the purpose of using switching elements which react to three voltage levels, for example +24 V, 0 V and -24 V, each signal-connection member 4 comprises three contact surfaces 26, and the substrate 22 is preferably constructed as a board having printed wiring on both sides, one contact surface 26 of each signal-connection member 4 being connected via the one side of the substrate 22 and one contact surface 26 being connected via the other side, while the third contact surface 26 is connected via both sides to, for example, a common potential. It goes without saying that, when using switching elements which react to two voltage levels, two contact surfaces 26 per signal-connection member 4 are sufficient.

Of the conductor strips 23, a first group of conductor strips 23a forms the connection between the connector 25 and the contact surfaces 26, while a second group of conductor strips 23b forms the connections between the connector 25 and the contact surfaces 24 of the contact member 6a. The conductor strips 23b thus serve to provide a connection between a conductor element (for example a further conductor module 10) which is connected to the contact member 6a, and a conductor element (for example the signal-connection unit 1c) which is connected to the contact member 6b. To provide connections to more than one further conductor module 10, it is obviously possible to equip the substrate 22 with more conductor strips 23b.

The housing 21 is preferably manufactured in one piece and comprises a middle part 29 and side parts 30, which are mutually connected by hinged folding edges 31. In order to achieve locking closure of the housing 21 around the substrate 22, the housing 21 is provided with locking lugs 32. Contact openings 33 provide the signal connector 12 of a switching element 2 with access to the signal-connection members 4. Additionally the housing 21 is provided with positioning lugs 34 for positioning the conductor module 10 in the distribution device 1. To this end, the connection blocks 8 of the distribution device 1 are preferably provided with cavities (not shown) to receive the positioning lugs 34.

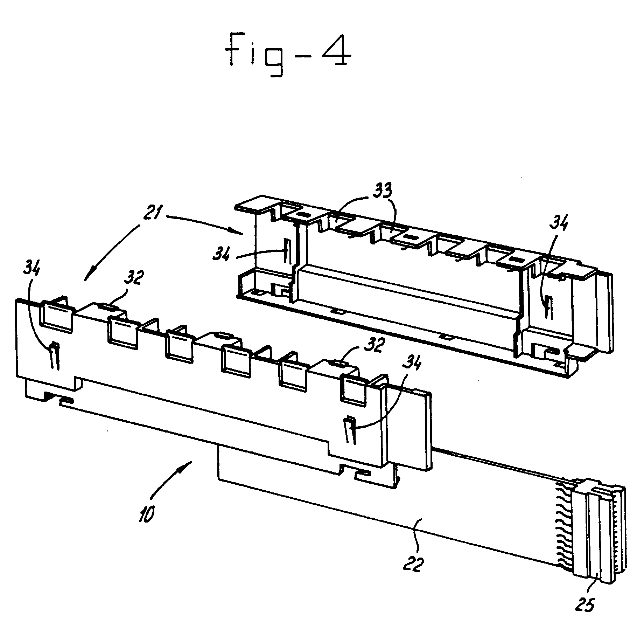

Figure 4 shows another embodiment of the conductor module 10 according to the invention. In this embodiment, the housing 21 is manufactured from two parts which may be secured to one another with the aid of locking lugs 32. Positioning lugs 34, which may also be omitted in some applications of the conductor module 10, provide defined positioning and reliable locking of the conductor module 10 in the distribution device 1 (not shown). The contact openings 33 provide access, as in the embodiment shown in Figure 3, to the signal-connection units mounted on the substrate 22, which connection members, like the conductor system and the contact members, are not shown for the sake of clarity, but may be constructed as shown in Figure 3.

With the aid of the conductor modules 10 it is possible to provide, in a simple manner, the conductors required for the remote control of switching elements in a distribution device. One or more conductor modules 10 may be fitted in a simple manner into an existing distribution device arranged for this purpose, whereby the distribution device can be made suitable for the incorporation of remotely control-lable switching means. As a result of the modular construction of the conductor system according to the invention it is possible to fit or to omit, as required, a conductor module 10 in various units associated with a distribution device. Furthermore, it is possible to expand the distribution device in a simple manner by adding a further unit having a conductor module 10 present therein or to be fitted therein. Furthermore, the wiring scheme of the conductor system may be modified in a simple manner by replacing the conductor module 10 by a conductor module with different internal wiring, for example another printed circuit board. With the aid of a conductor module according to the invention it is therefore possible to achieve a highly flexible distribution device.

## Claims

1. Distribution device (1) for an electrical installation, comprising remotely controllable switching elements (2), energy-connection members (3) and signal-connection members (4), the latter two members being arranged for the respective connection with an energy connector (13) and a signal connector (12) on the switching element, in which the signal connection members (4) are connected to a conductor system (5) for transmitting control signals, and in which the conductor system (5) comprises one or more conductor modules (10), each conductor module (10) comprising conductors (5, 23) accomodated in a common housing (21), as well as contact members (24, 25) for making contact with further conductors, **characterized** in that the energy-connection members (3a,3b) are arranged in rows, that the conductor system (5) comprises conductor modules (10) extending parallel to the rows of energy connecting members (3) and that the signal connection members (4) are disposed in the conductor modules (10).

2. Distribution device according to claim 1, wherein the energy connection members (3) comprise input connection members (3a) arranged in a first row and energy output connection members (3b) arranged in a second row spaced from and parallel to the first row, wherein the conductor modules (10) are positioned between the two rows.

3. Distribution device according to claim 1 or 2, wherein said device (1) is equipped to incorporate switching elements (2) adjacent to each other and transversely to the conductor modules (10).

4. Distribution device according to claim 1, 2 or 3, wherein said device (1) comprises a signal connection unit (1c) provided with terminal strips (16), which terminal strips (16) are connected to a conductor module (10) and to one or more connectors (18) for the input or output of control signals.

5. Conductor module for use in a distribution device according to one of the preceding claims, **characterized** in that said module (10) comprises a first group of conductors (23a) connected to respective signal-connection members (4) of the conductor module (10), for supplying control signals to said members, as well as a second group of conductors (23b) connected to contact members (24, 25) for supplying control signals to at least one further conductor module (10).

6. Conductor module according to claim 5, having two long sides and two short sides, wherein the signal-connection members (4) are disposed along a long side, and the contact members (6) are disposed along at least one short side.

7. Conductor module according to claims 5 or 6, wherein the signal-connection members (4) each comprise three contact surfaces (26).

8. Conductor module according to claims 5, 6 or 7, wherein the conductors (23) are formed by conductor strips of a printed circuit board (22), preferably a double-sided printed circuit broad.

9. Conductor module according to claims 5, 6 or 7, wherein the conductors (23) are formed by conductor strips disposed on a flexible foil.

10. Conductor module according to any of the claims 5 to 9 inclusive, wherein the housing (21) is provided with positioning lugs (34) for positioning the conductor module (10) in the distribution device (1).

11. Conductor module according to any of claims 5 to 10 inclusive, wherein the housing (21) comprises a middle part (29) and at least two side parts (30) which are connected with the middle part (29) by folding edges (31), at least one side part (30) being provided with locking means (32) engaging with the other side part (30).

## Patentansprüche

1. Verteilereinrichtung (1) für eine elektrische Installation, umfassend fernsteuerbare Schaltelemente (2), Stromverbindungsglieder (3) und Signalverbindungsglieder (4), wobei die letzteren zwei Glieder angeordnet sind für die jeweilige Verbindung mit einem Strom- bzw. Energieverbinder (13) und einem Signalverbinder (12) an dem Schaltelement, in welchem die Signalverbindungsglieder (4) verbunden sind mit einem Leitersystem (5) zum Übertragen von Steuersignalen, und in welchem das Leitersystem (5) eines oder mehrere Leitermodule (10) umfaßt, wobei jedes Leitermodul (10) Leiter (5, 23) umfaßt, aufgenommen in einem gemeinsamen Gehäuse (21), sowie Kontaktglieder (24, 25) zum Bilden von Kontakt zu weiteren Leitern,
**dadurch gekennzeichnet,** daß die Stromverbindungsglieder (3a, 3b) in Reihen angeordnet sind, daß das Leitersystem (5) Leitermodule (10) umfaßt, welche parallel zu den Reihen von Stromverbindungsgliedern (3) verlaufen, und daß die Signalverbindungsglieder (4) in den Leitermodulen (10) angeordnet sind.

2. Verteilereinrichtung nach Anspruch 1, bei welcher die Strom- bzw. Energieverbindungsglieder (3) umfassen Eingangsverbindungsglieder (3a), angeordnet in einer ersten Reihe, und Stromausgangsverbindungsglieder (3b), angeordnet in einer zweiten Reihe, beabstandet von und parallel zu der ersten Reihe, wobei die Leitermodule (10) zwischen den zwei Reihen angeordnet sind.

3. Verteilereinrichtung nach Anspruch 1 oder 2, bei welcher die Einrichtung (1) vorgesehen ist zum Inkorporieren von Schaltelementen (2), benachbart zueinander und transversalwärts zu den Leitermodulen (10).

4. Verteilereinrichtung nach Anspruch 1, 2 oder 3, bei welcher die Einrichtung (1) eine Signalverbindungseinheit (1c) umfaßt, bereitgestellt mit Anschlußstreifen (16), welche Anschlußstreifen (16) mit einem Leitermodul (10) und einem oder mehreren Verbindern (18) zum Eingeben oder Ausgeben von Steuersignalen verbunden bzw. geschaltet sind.

5. Leitermodul zur Verwendung in einer Verteilereinrichtung gemäß einem der vorangegangenen Ansprüche,
**dadurch gekennzeichnet,** daß das Modul (10) eine erste Gruppe von Leitern (23a), verbunden mit jeweiligen Signalverbindungsgliedern (4) der Leitermodule (10) zum Zuführen von Steuersignalen zu den Gliedern, umfaßt, sowie eine zweite Gruppe von Leitern (23b), verbunden mit Kontaktgliedern (24, 25) zum Zuführen von Steuersignalen zu zumindest einem weiteren Leitermodul (10).

6. Leitermodul nach Anspruch 5, mit zwei langen Seiten und zwei kurzen Seiten, wobei die Signalverbindungsglieder (4) entlang einer langen Seite angeordnet sind, wobei die Kontaktglieder (6) entlang zumindest einer kurzen Seite angeordnet sind.

7. Leitermodul nach Anspruch 5 oder 6, bei welchem die Signalverbindungsglieder (4) jeweils drei Kontaktflächen (26) umfassen.

8. Leitermodul nach Anspruch 5, 6 oder 7, bei welchem die Leiter (23) gebildet sind durch Leiterstreifen einer gedruckten Schaltplatine (22), bevorzugt einer doppelseitig gedruckten bzw. bedruckten Schalt- bzw. Schaltungsplatine.

9. Leitermodul nach Anspruch 5, 6 oder 7, bei welchem die Leiter (23) gebildet sind durch Leiterstreifen, angeordnet an einer flexiblen Folie.

10. Leitermodul nach einem der Ansprüche 5 bis 9, bei welchem das Gehäuse (21) bereitgestellt ist mit Positioniernasen (34) zum Positionieren des Leitermodules (10) in der Verteilereinrichtung (1).

11. Leitermodul nach einem der Ansprüche 5 bis 10, bei welchem das Gehäuse (21) einen Mittelteil (29) und zumindest zwei Seitenteile (30) umfaßt, welche mit dem Mittelteil (29) durch Faltkanten (31) verbunden sind, wobei zumindest ein Seitenteil (30) bereitgestellt ist mit einer Verschlußeinrichtung (32), welche mit dem anderen Seitenteil (30) in Eingriff tritt.

## Revendications

1. Dispositif de distribution (1) pour une installation électrique, comprenant des éléments de commutation (2) commandables à distance, des éléments de connexion pour l'énergie (3) et des éléments de connexion pour le signal (4), ces éléments de connexion pour l'énergie et de connexion pour le signal étant arrangés pour la connexion respective avec un connecteur pour l'énergie (13) et un connecteur pour le signal (12) sur l'élément de commutation, dans lequel les éléments de connexion pour le signal (4) sont connectés à un système conducteur (5) destiné à transmettre des signaux de commande, et dans lequel le système conducteur (5) comprend un ou plusieurs modules conducteurs (10), chaque module conducteur (10) comprenant des conducteurs (5, 23) logés dans un boîtier commun (21), ainsi que des éléments de contact (24, 25) destinés à établir le contact avec d'autres conducteurs, caractérisé en ce que les éléments de connexion pour l'énergie (3a, 3b) sont disposés en rangées, en ce que le système conducteur (5) comprend des modules conducteurs (10) s'étendant parallèlement aux rangées d'éléments de connexion pour l'énergie (3), et en ce que les éléments de connexion pour le signal (4) sont disposés dans les modules conducteurs (10).

2. Dispositif de distribution selon la revendication 1, dans lequel les éléments de connexion pour l'énergie (3) comprennent des éléments de connexion d'entrée (3a) disposés en une première rangée et des éléments de connexion de sortie (3b) disposés en une seconde rangée écartée de la première rangée et parallèle à celle-ci, les modules conducteurs (10) étant positionnés entre les deux rangées.

3. Dispositif de distribution selon la revendication 1 ou 2, lequel dispositif (1) est équipé en vue d'incorporer les éléments de commutation (2) les uns à côté des autres et transversalement par rapport aux modules conducteurs (10).

4. Dispositif de distribution selon l'une des revendications 1, 2 ou 3, dans lequel ledit dispositif (1) comprend une unité de connexion pour le signal (lc) pourvue de connecteurs plats (16), lesquels connecteurs plats (16) sont connectés à un module conducteur (10) et à un ou plusieurs connecteurs (18) pour l'entrée ou la sortie de signaux de commande.

5. Module conducteur destiné à être utilisé dans un dispositif de distribution selon l'une des revendications précédentes, caractérisé en ce que ledit module (10) comprend un premier groupe de conducteurs (23a) connecté à des éléments de connexion pour le signal respectifs (4) du module conducteur (10) afin de transmettre des signaux de commande auxdits éléments, ainsi qu'un second groupe de conducteurs (23b) connectés à des éléments de contact (24, 25) afin de transmettre des signaux de commande à au moins un autre module conducteur (10).

6. Module conducteur selon la revendication 5, comportant deux grands côtés et deux petits côtés, dans lequel les éléments de connexion pour le signal (4) sont disposés le long d'un grand côté, et les éléments de contact (6) sont disposés le long d'au moins un petit côté.

7. Module conducteur selon la revendication 5 ou 6, dans lequel les éléments de connexion pour le signal (4) comprennent chacun trois surfaces de contact (26).

8. Module conducteur selon l'une des revendications 5, 6 ou 7, dans lequel les conducteurs (23) sont formés par les. bandes conductrices d'une carte de circuit imprimé (22), de préférence une carte de circuit imprimé à double face.

9. Module conducteur selon l'une des revendications 5, 6 ou 7, dans lequel les conducteurs (23) sont formés par des bandes conductrices disposées sur une feuille souple.

10. Module conducteur selon l'une quelconque des revendications 5 à 9 incluse, dans lequel le boîtier (21) est pourvu de languettes de positionnement (34) servant au positionnement du module conducteur (10) dans le dispositif de distribution (1).

11. Module conducteur selon l'une quelconque des revendications 5 à 10 incluse, dans lequel le boîtier (21) comprend une partie médiane (29) et au moins deux parties latérales (30) qui sont reliées avec la partie médiane (29) par des bords de pliage (31), au moins une partie latérale (30) étant pourvue de moyens de verrouillage (32) s'engageant avec l'autre partie laterale (30).
